# EUROPÄISCHE PATENTANMELDUNG

(11) **EP 0 620 417 A1**
(43) Veröffentlichungstag der Anmeldung: **19.10.1994**
(21) Anmeldenummer: 94101251.0
(22) Anmeldetag: 28.01.1994
(51) Int. Cl.: G01D 5/26

(54) **Gekapselte Längenmesseinrichtung**

(30) Priorität: 10.04.1993 DE 4311960
(71) Anmelder: Dr. Johannes Heidenhain GmbH, D-83292 Traunreut (DE)
(72) Erfinder: Nelle, Günther, Dr., D-8346 Bergen (DE); Pechak, Peter, D-83371 Stein/Traun (DE)

(57) **Zusammenfassung**

Bei einer gekapselten Längenmeßeinrichtung sind zwei Dichtmittel vorgesehen, und zwar in einem Hohlkörper (1) dachförmig angeordnete Dichtlippen (5, 6), die zusätzlich von einem flexiblen Band (8) abgedeckt sind, das außen am Hohlkörper (1) anliegt und an diesem festgehalten wird.

## Beschreibung

Die Erfindung betrifft eine gekapselte Längenmeßeinrichtung zur Bestimmung der Relativlage zweier Objekte, deren Maßverkörperung zusammen mit der sie abtastenden Abtastbaueinheit in einem Hohlkörper eingebracht sind, der mittels flexibler Dichtlippen abgedeckt ist, zwischen denen ein die Abtasteinheit mit dem zu messenden Objekt verbindender Mitnehmer hindurchgreift.

Es sind bereits diverse Ausführungen gekapselter Längenmeßeinrichtungen bekannt geworden, deren Dichtelemente folgendermaßen gestaltet sind:

Aus der DE-OS 17 73 403 ist es bereits bekannt, den Hohlkörper mittels zweier dachförmig angeordneter Dichtlippen abzudecken, die aus Gummi oder Kunststoff bestehen. In der Praxis kann damit eine gute Dichtwirkung erzielt werden; die flexiblen Dicht-Lippen aus Gummi oder Kunststoff können aber durch mechanische Einwirkungen - beispielsweise durch glühende Späne - Beschädigungen erleiden.

Aus der DE-PS 22 07 374 sind ferner Dichtelemente bei gekapselten Längenmeßeinrichtungen bekannt geworden, die in Form eines flexiblen Stahlbandes ausgebildet sind, das den Hohlkörper abdeckt und mittels Magnetleisten an diesem gehalten wird. Das Stahlband als Abdeckfolie gleitet dabei über einen mit dem Abtastkopf verbundenen Mitnehmer, was zu mehr oder weniger großen Spaltöffnungen an den Endbereichen des Mitnehmers führt, durch die Flüssigkeit in das Innere des die Maßverkörperung und den Abtastkopf aufnehmenden Hohlkörpers eindringen kann.

Aufgabe der Erfindung ist es, mit einfachen Mitteln eine kompakte gekapselte Längenmeßeinrichtung der eingangs genannten Art zu schaffen, deren Dichtelemente eine gute Abschirmung gegen äußere Einflüsse gewährleisten und die zudem auch gegen Einwirkungen mechanischer Art resistent ist.

Die Erfindung löst die gestellte Aufgabe dadurch, daß die flexiblen Dichtlippen in einem Raum des Hohlkörpers angeordnet sind, der zudem durch ein flexibles Band abgedeckt ist, das am Hohlkörper anliegt und an diesem gehalten wird.

Bei einer bevorzugten Ausführung der Erfindung ist das flexible Band ein Stahlband hoher Längenkonstanz, das mittels am Hohlkörper angebrachter Magnetleisten gehalten wird. Die flexiblen Dichtlippen, die vom Stahlband abgedeckt sind, sind zweckmäßig am Hohlkörper dachförmig angeordnete Dichtstreifen aus Gummi oder Kunststoff.

Vorteilhaft bei der gekapselten Längenmeßeinrichtung ist, daß sich die dachförmig angeordneten flexiblen Dichtlippen aus biegsamen Material an den Mitnehmer anschmiegen und somit eine gute Dichtwirkung ermöglichen, während die zusätzliche Abdeckung mittels eines flexiblen Bandes nicht nur die Dichtwirkung insgesamt erhöht, sondern vor allem einen guten Schutz vor mechanischen Einwirkungen auf die flexiblen Dichtlippen gewährleistet.

In der Zeichnung ist ein Ausführungsbeispiel der Erfindung dargestellt.

Es zeigt :

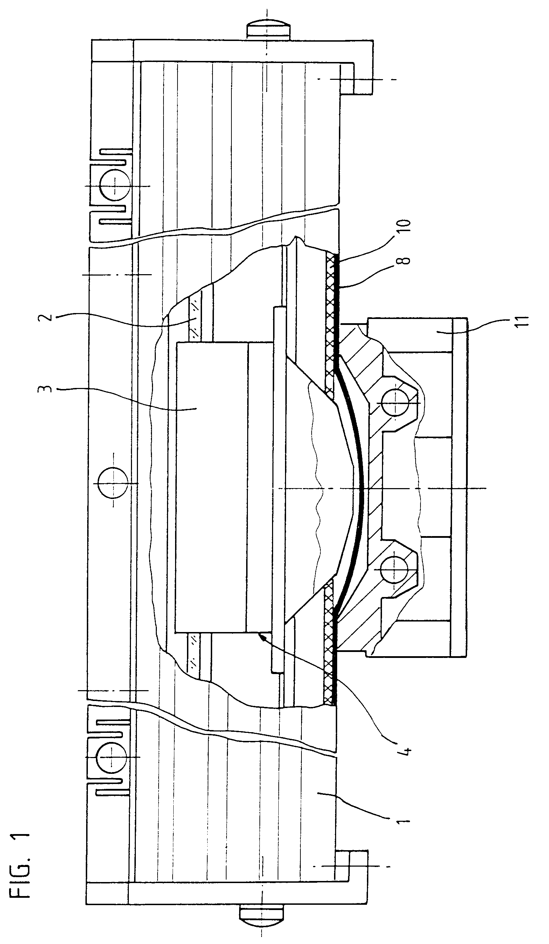

- Figur 1: eine Seitenansicht der gekapselten Längenmeßeinrichtung nach der Erfindung (teilweise geschnitten);

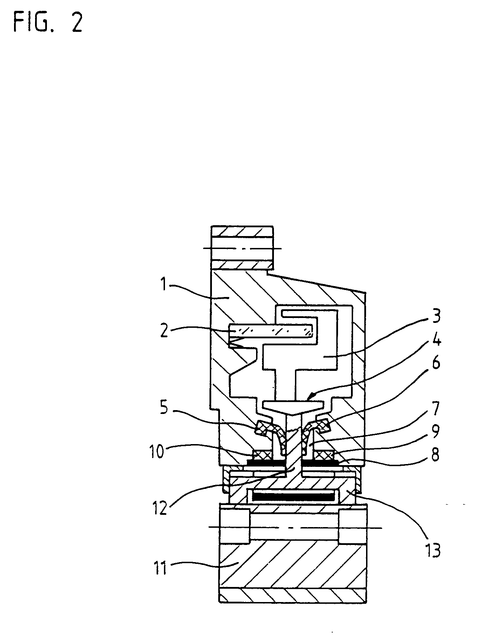

- Figur 2: einen Schnitt durch die Längenmeßeinrichtung nach Figur 1.

Die gekapselte Längenmeßeinrichtung - im Ausführungsbeispiel ein inkrementales Meßsystem lichtelektrischer Art - weist einen Hohlkörper 1 auf, in welchem eine Maßverkörperung 2 in Form einer Gitterteilung zweckmäßig durch Kleben befestigt ist.

Die Maßverkörperung 2 wird mittels einer Abtastbaueinheit 3 abgetastet, die über einen insgesamt mit 4 bezeichneten Mitnehmer mit einem zu messenden Objekt (nicht dargestellt) verbunden ist, das beispielsweise der Schlitten einer Werkzeug oder Meßmaschine sein kann.

Der die Maßverkörperung 2 und Abtasteinheit 3 aufnehmende Innenraum des Hohlkörpers 1 ist mittels dachförmig angeordneter Dichtlippen 5 und 6 zweckmäßig aus Gummi oder Kunststoff abgedeckt. Die Dichtlippen 5 und 6 sind dabei in einem Raum 7 des Hohlkörper 1 vorgesehen, der mittels eines weiteren Dicht- bzw. Abdeckelementes 8 in Form eines flexiblen Stahlbandes abgedeckt ist, was eine besonders robuste und gut gekapselte Längenmeßeinrichtung ergibt. Das Stahlband 8 wird dabei mittels zweier Magnetleisten 9 und 10 außen am Hohlkörper 1 gehalten.

Der Mitnehmer 4 durchdringt die Dichtlippen 5 und 6 und ist in seinem Abschnitt 12 im Querschnitt schwertförmig ausgebildet, so daß eine besonders gute Dichtwirkung erzielt werden kann. Der schlanke schwertförmige Abschnitt 12 des Mitnehmers 4 mündet in einen an der Außenseite gekrümmten, breiten Fußteil 13, über den das Stahlband 8 als weiteres Abdeckelement gleitet und an dessen seitlichen Vorsprüngen ein Montagefuß 11 angebracht ist, über welchen der Mitnehmer 4 und somit die Abtastbaueinheit 3 mit dem zu messenden Objekt verbunden sind.

In weiterer Ausgestaltung der Erfindung ist es auch möglich, das Stahlband 8 durch ein Textilband zu ersetzen, das durch entsprechend ausgebildete Haltemittel am Hohlkörper 1 gehalten wird.

Das physikalische Prinzip der gekapselten Längenmeßeinrichtung kann selbstverständlich beliebig sein, nämlich optischer, lichtelektrischer, induktiver, magnetiver und kapazitiver Art.

## Patentansprüche

1. Gekapselte Längenmeßeinrichtung zur Bestimmung der Relativlage zweier Objekte, deren Maßverkörperung zusammen mit der sie abtastenden Abtastbaueinheit in einem Hohlkörper eingebracht sind, der mittels flexibler Dichtlippen abgedeckt ist, zwischen denen ein die Abtasteinheit mit dem zu messenden Objekt verbindender Mitnehmer hindurchgreift, dadurch gekennzeichnet, daß die flexiblen Dichtlippen (5, 6) in einem Raum (7) des Hohlkörpers (1) angeordnet sind, der zudem durch ein flexibles Band (8) abgedeckt ist, das am Hohlkörper (1) anliegt und an diesem gehalten wird.

2. Gekapselte Längenmeßeinrichtung nach Anspruch 1, dadurch gekennzeichnet, daß das flexible Band (8) ein Stahlband hoher Längenkonstanz ist, das mittels am Hohlkörper (1) angebrachter Magnetleisten (9, 10) gehalten wird.

3. Gekapselte Längenmeßeinrichtung nach Anspruch 1, dadurch gekennzeichnet, daß die flexiblen Dichtlippen (5, 6) aus Gummi oder Kunststoff bestehen und dachförmig am Hohlkörper (1) angebracht sind.
